# EUROPÄISCHE PATENTANMELDUNG

(11) **EP 1 321 219 A1**
(43) Veröffentlichungstag der Anmeldung: **25.06.2003**
(21) Anmeldenummer: 01130357.5
(22) Anmeldetag: 19.12.2001
(51) Int. Cl.: B23P 15/00, B23P 13/00, B21H 8/00, B21C 37/02, B21D 53/88

(54) **Verfahren zur Herstellung von in der Dicke bereichsweise variierenden Platinen**

(71) Anmelder: Benteler Automobiltechnik GmbH & Co. KG, 33104 Paderborn (DE)
(72) Erfinder: Knaup, Hans-Jürgen, 33175 Bad Lippspringe (DE)
(74) Vertreter: Ksoll, Peter, Dr.-Ing.

(57) **Zusammenfassung**

Die Erfindung betrifft ein Verfahren zur Herstellung von in der Dicke D, D1, D2 bereichsweise variierenden Platinen aus Metallblech zur Fertigung von Strukturteilen für Kraftfahrzeuge. Hierbei werden an einem Metallblech zunächst mindestens ein Bereich A, B durch Schubumformen von einer 1. Seite 3 des Metallblechs 1 her quer verschoben. Anschließend wird die auf der gegenüberliegenden 2. Seite 8 entstandene Erhebung 7 spanabhebend abgetragen wird. Hierbei wird das Metallblech auf einer Magnet-Spannplatte 12 gehalten. Die 2. Seite 8 wird über ihre gesamte Fläche in einem Arbeitsgang spanabhebend durch einen Fräser 11 bearbeitet.

## Beschreibung

Die Erfindung betrifft ein Verfahren zur Herstellung von in der Dicke bereichsweise variierenden Platinen aus Metallblech.

In der Dicke variierende metallische Platinen, vorzugsweise aus Stahlblech, kommen verstärkt im Kraftfahrzeugbau zur Anwendung. Hierdurch kann das Gewicht von Karosseriebauteilen in Anpassung an deren Funktion reduziert werden. Derartige Karosseriebauteile sind beispielsweise A-, B- und C-Säulen, Stoßfänger bzw. deren Querträger, Dachrahmen, Seitenaufprallträger, Außenhautteile usw..

In diesem Zusammenhang zählt es zum Stand der Technik, sogenannte Tailored Blanks einzusetzen. Hierbei handelt es sich um Platinen, die aus mehreren Blechteilen mit gleicher oder unterschiedlicher Blechdicke zusammengeschweißt sind. Auch die Verwendung von sogenannten Patchwork Blanks ist bekannt. Dies sind parallel aufeinander gesetzte Bleche variierender Dicke.

Obwohl mit den Tailored und Patchwork Blanks eine deutliche Gewichtsreduzierung erreicht wird, ohne die Funktion der Karosseriebauteile zu beeinträchtigen, ist mit ihrer Bereitstellung ein vergleichsweise hoher Aufwand verbunden. Es müssen nämlich Stahlbleche verschiedener Dicke zu Streifen geschnitten und dann gefügt werden. Auch sind diese Produkte Wärmebehandlungen durch das Fügen unterworfen, die gegebenenfalls nachteilige Gefügeveränderungen herbeiführen können.

Zum Stand der Technik zählt bekanntermaßen auch das Warm- und Kaltumformen von Metallblechen in Walzvorrichtungen. So beschreibt die DE 42 31 213 A1 die Herstellung von Formkörpern mit unterschiedlichen Wanddicken, bei dem ein zunächst ebenes Blechteil in einem Walzstuhl bereichsweise dickenreduziert und anschließend zum Formkörper weiterverarbeitet wird.

Ähnliche Vorschläge, beispielsweise zur Herstellung von Röhren mit wechselnder Wanddicke, sind durch die DE-PS 104 875, die DE 38 02 445 A1 oder die EP 0 133 705 A1 bekannt.

Die vorgenannten Verfahren benötigen einen hohen Aufwand an Maschinen und Anlagen mit einem nicht unerheblichen Kostenaufwand. Auch ist die Gestaltungsfreiheit hinsichtlich Anzahl, Form und Wandstärke der wanddickenreduzierten Bereiche eingeschränkt.

Der Erfindung liegt daher ausgehend vom Stand der Technik die Aufgabe zugrunde, ein Verfahren zur wirtschaftlichen Herstellung von bereichsweise in der Dicke variierenden Platinen zu schaffen, welches eine präzisere und variable Dickenverteilung ermöglicht, so dass eine gute Anpassung der Platinen an die geforderte Bauteilfestigkeit bei hohem Gewichtseinsparungspotential möglich ist.

Die Lösung dieser Aufgabe besteht in einem Verfahren mit den Maßnahmen von Anspruch 1.

Erfindungsgemäß ist vorgesehen, an einem Metallblech zunächst mindestens einen Bereich durch Schubumformen von einer 1. Seite des Metallblechs her quer zu verschieben und in einem sich anschließenden Arbeitsschritt die auf der gegenüberliegenden 2. Seite entstandene Erhebung spanabhebend abzutragen. Vorzugsweise aber nicht zwingend erfolgt der Abtrag soweit, bis die 2. Seite des Metallblechs wieder eine ebene Fläche aufweist.

Das anfänglich eingesetzte Metallblech besitzt eine Dicke, die der maximal gewünschten Materialstärke entspricht. In den Bereichen einer gewünschten Wanddickenreduktion wird das Material des Metallblechs dann durch Schubumformen quer, vorzugsweise im wesentlichen parallel verschoben. Fachterminologisch spricht man bei dieser Art der Umformung auch von "Durchsetzen, Hohlprägen oder Ziehen". Hierdurch entstehen im Metallblech Durchsetzungen mit einer Vertiefung auf der 1. Seite und einer Erhebung auf der gegenüberliegenden 2. Seite. Die Verschiebungen am Metallblech werden vorzugsweise ohne erheblichen Mehraufwand in den Folgeschnittwerkzeugen beim Schneiden einer Platine mit eingebracht. Anschließend werden die Erhebungen auf der 2. Seite spanabhebend durch ein Bearbeitungswerkzeug, vorzugsweise einem Fräser, abgetragen.

Hierbei kann die 2. Seite des Metallblechs über ihre gesamte Fläche in einem Arbeitsgang spanabhebend bearbeitet werden, wie dies Anspruch 2 vorsieht. Dies hat den Vorteil, dass die Bearbeitung nicht zeilenförmig mit speziellen Fräsern bahngesteuert erfolgen muss. Das Bearbeitungswerkzeug kann die gesamte Breite der Platine in einem Arbeitsgang mit der optimalen Schnittgeschwindigkeit und Vorschub bearbeiten. Dies bedeutet gegenüber dem Fräsen von Vertiefungen im Metallblech auf der 1. Seite mit einem Numerikfräser (NC- oder CNC-Maschine) eine wesentlich rationellere Vorgehensweise.

Nach der Maßnahme gemäß Anspruch 3 wird das Metallblech beim Spanvorgang in einer Spanneinrichtung gehalten. Besonders vorteilhaft findet hierbei eine Magnet- oder Vakuum-Spannplatte Verwendung (Anspruch 4). Eine Vakuum-Spannplatte bietet sich bei der Verwendung von Platinen aus Nichteisenmetallen, wie z.B. Aluminium, an.

Mit dem erfindungsgemäßen Verfahren können in der Dicke bereichsweise variierende Metallplatinen erzeugt werden, deren Geometrie auf den späteren Einsatz eines hieraus gefertigten Strukturteils im Kraftfahrzeug abgestimmt ist. Die Metallplatinen werden daher für die Herstellung von Strukturteilen eingesetzt, die unter äußerer Belastung stehen, bei denen aber die auftretenden Spannungen aufgrund der Kraftfahrzeugkonstruktion verteilt über die Bauteile in unterschiedlicher Höhe vorliegen. Durch den Einsatz der partiell wanddickenreduzierten Metallplatinen kann eine Überdimensionierung ausgelegt nach der Maximalbelastung im Kraftfahrzeug vermieden werden. Hierdurch wird Gewicht eingespart. Die Anzahl, Form und die jeweilige Wandstärke der wanddickenreduzierten Bereiche kann sehr variabel auf die jeweiligen Einsatzgegebenheiten abgestellt werden.

Die Erfindung ist nachfolgend anhand eines in den Zeichnungen dargestellten Ausführungsbeispiels näher beschrieben.

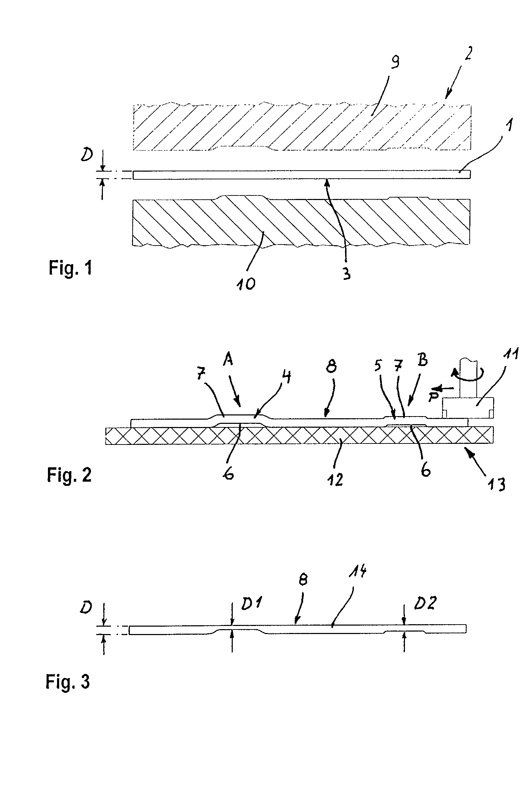

Die Figuren 1 bis 3 zeigen - technisch vereinfacht - den Verfahrensablauf zur Herstellung einer in der Dicke bereichsweise variierenden metallischen Platine.

Für die Herstellung einer dickenoptimierten Platine mit einer auf die spätere Verwendung als Strukturteil eines Kraftfahrzeugs angepassten Wandstärke kommt als Ausgangsprodukt ein Metallblech 1 zum Einsatz. Dieses besitzt eine der maximal gewünschten Materialstärke entsprechende Dicke D. An dem Metallblech 1 werden in einem Pressenwerkzeug 2 Bereiche A, B durch Schubumformen von einer 1. Seite 3 des Metallblechs 1 her quer, im wesentlichen parallel verschoben. Hierdurch entstehen im Metallblech 1 Durchsetzungen 4, 5 mit einer Vertiefung 6 auf der 1. Seite 3 und mit einer Erhebung 7 auf der gegenüberliegenden 2. Seite 8 (s. hierzu Figur 2).

Man erkennt, dass das Pressenwerkzeug 2 eine obere Matrize 9 und eine untere Patrize 10 umfasst mit einer auf die gewünschte Formgebung des Metallblechs 1 abgestimmten Kontur. Für die Praxis bietet es sich an, die Schubumformung zur Erstellung der Durchsetzungen 4, 5 in die Schnittwerkzeuge zu integrieren, die zum Schneiden der Metallbleche 1 eingesetzt werden. Auf diese Weise kann beispielsweise Stahlblechband von einem Coil abgezogen und dem Schnittwerkzeug zugeführt werden. Im Schnittwerkzeug erfolgt dann der Profilschnitt der Metallbleche 1 einschließlich der Schubumformung der Durchsetzungen 4, 5.

In einem nachfolgenden Arbeitsschritt werden die auf der 2. Seite 8 entstandenen Erhebungen 7 spanabhebend abgetragen, wie dies Figur 2 zeigt. Hierbei kommt als Bearbeitungswerkzeug ein Fräser 11 zum Einsatz. Die 2. Seite 8 des Metallblechs 1 wird über die gesamte zu bearbeitende Fläche in einem Arbeitsgang (Pfeil P) durch den Fräser 11 spanabhebend bearbeitet, bis die Oberfläche der 2. Seite 8 eben ist. Hierbei wird das Metallblech 1 auf einer Magnet-Spannplatte 12 einer Spanneinrichtung 13 gehalten. Der Fräser 11 bearbeitet die 2. Seite 8 des Metallblechs 1 in einem Arbeitsgang mit optimaler Schnittgeschwindigkeit und Vorschub. Ein zeilenförmiger bahngesteuerter Fräsvorgang ist nicht notwendig.

Figur 3 zeigt eine fertige Platine 14. Diese weist in den Bereichen A und B eine gegenüber der Ausgangsdicke D reduzierte Dicke D1 bzw. D2 auf.

Das erfindungsgemäße Verfahren ermöglicht die wirtschaftliche Herstellung von Platinen 14 mit sehr variabler Dickenverteilung. Die Platinen 14 erhalten eine auf ihre spätere Verwendung und die hierbei auftretenden Belastungen abgestimmte Dicke D bzw. D1 und D2.

Eine fertige Platine 14 wird dann der weiteren umformtechnischen Verarbeitung zum Strukturteil für ein Kraftfahrzeug zugeleitet.

### Bezugszeichenaufstellung

- 1 -: Metallblech
- 2 -: Pressenwerkzeug
- 3 -: 1. Seite v. 1
- 4 -: Durchsetzung
- 5 -: Durchsetzung
- 6 -: Vertiefung
- 7 -: Erhebung
- 8 -: 2. Seite von 1
- 9 -: Matrize
- 10 -: Patrize
- 11 -: Fräser
- 12 -: Magnet-Spannplatte
- 13 -: Spanneinrichtung
- 14 -: Platine

- P -: Pfeil
- A -: Bereich
- B -: Bereich
- D -: Dicke
- D1 -: Dicke
- D2 -: Dicke

## Patentansprüche

1. Verfahren zur Herstellung von in der Dicke (D, D1, D2) bereichsweise variierenden Platinen aus Metallblech zur Fertigung von Strukturteilen für Kraftfahrzeuge, bei welchem an einem Metallblech (1) zunächst mindestens ein Bereich (A, B) durch Schubumformen von einer 1. Seite (3) des Metallblechs (1) her quer verschoben wird, und dass anschließend die auf der gegenüberliegenden 2. Seite (8) entstandene Erhebung (7) spanabhebend abgetragen wird.

2. Verfahren nach Anspruch 1, bei welchem die 2. Seite (8) des Metallblechs (1) über ihre gesamte Fläche in einem Arbeitsgang spanabhebend bearbeitet wird.

3. Verfahren nach Anspruch 1 oder 2, bei welchem das Metallblech (1) beim Spanvorgang in einer Spanneinrichtung (13) gehalten wird.

4. Verfahren nach Anspruch 3, bei welchem beim Spanvorgang zum Spannen des Metallblechs (1) eine Magnet-Spannplatte (12) oder eine Vakuum-Spannplatte verwendet wird.
